# EUROPEAN PATENT APPLICATION

(11) **EP 4 510 442 A1**
(43) Date of publication of application: **19.02.2025**
(21) Application number: 24188594.6
(22) Date of filing: 15.07.2024
(51) Int. Cl.: H02P 9/10, H02P 29/024, H02P 29/62

(54) **GENERATOR SYSTEMS**

(30) Priority: 14.08.2023 US 202318233520
(71) Applicant: Hamilton Sundstrand Corporation, Charlotte, NC 28217-4578 (US)
(72) Inventor: WILKINSON, Andrew R., Cherry Valley, IL (US); PATEL, Dhaval S., Schaumburg, IL (US)
(74) Representative: Dehns

(57) **Abstract**

A generator system can include a generator control unit (GCU) configured to control a generator output of a generator. The GCU (102) can be configured to monitor the generator output for overvoltage and attenuate an overvoltage by directing at least a portion of the generator output to a heater element. The GCU (102) can be configured to cause voltage division of the generator output between the GCU (102) and the heater element if an overvoltage is detected to protect one or more GCU electrical components.

## Description

### FIELD

This disclosure relates to generator systems, for example for aircraft.

### BACKGROUND

In certain applications, for example, in aerospace, there may be requirements for electrical systems in which voltage thresholds are not to be exceeded ensuring the safety and life of aircraft components. A Ram Air Turbine (RAT) Generator for an aircraft, for example, should meet those requirements. The RAT Generator can be designed and operates within an expected voltage and speed range when being utilized. In certain systems, the voltage of the stator output of the Permanent Magnet generator (PMG) stage is a result of a prime mover turning the rotor at some given angular velocity. The velocity at which flux lines cross the coil windings, the number of turns over a length per coil and the flux density are the fundamental components that determine voltage magnitude. Since the stator core, coils, and magnets are physically fixed this means that the voltage is directly dependent on the rotational velocity. There are possible external events regarding the system load that can cause the prime mover to over speed, such as an abrupt removal of a load. The magnitude of the over speed event may cause a temporary undesired increase in voltage, while the system stabilizes, for example.

Such conventional methods and systems have generally been considered satisfactory for their intended purpose. However, there is still a need in the art for improvements. The present disclosure provides a solution for this need.

### SUMMARY

A generator system can include a generator control unit (GCU) configured to control a generator output of a generator. The GCU can be configured to monitor the generator output for overvoltage and attenuate an overvoltage by directing at least a portion of the generator output to a heater element. The GCU can be configured to cause voltage division of the generator output between the GCU and the heater element if an overvoltage is detected to protect one or more GCU electrical components.

The generator system can further include a divider switch configured to be disposed between the heater element and a generator output line to selectively and electrically communicate the generator output line to the heater element. In certain embodiments, the heater element can be connected to the divider switch controlled by the GCU to selectively form a voltage divider between the GCU and the heating element.

In certain embodiments, the generator system can further include the generator. The generator can include a permanent magnet generator (PMG). The generator output line can be a PMG output line. In certain other embodiments, the generator can include a controllable voltage generator controlled by the GCU to output a controlled voltage.

In certain embodiments, the generator system can further include the heater element. The heater element can be a main stator heater of the controllable voltage generator. In certain embodiments the generator system can further include a ram air turbine (RAT) operatively connected to the generator to drive the generator. In certain embodiments, the generator can be a variable frequency generator (VFG).

In accordance with at least one aspect of this disclosure, a ram air turbine (RAT) system (e.g., generator system 100) can be or include any suitable generator system as disclosed herein, for example, as described above.

In certain embodiments, the GCU can include a rectifier. The GCU can be configured to cause voltage division of the generator output between the GCU and the heater element if an overvoltage is detected to protect the rectifier of the GCU. In certain embodiments, the GCU can further include a controller configured to receive voltage and current inputs from the generator and output an excitation command.

In certain embodiments, the GCU can include an exciter drive connected to the controller to receive the excitation command from the controller. The controller can be configured to control the exciter drive to output an excitation signal as a function of the excitation command.

In certain embodiments, the generator includes a controllable voltage generator connected to the exciter drive of the GCU to receive the excitation signal and output a controlled voltage. In certain embodiments, the system can further include the heater element. The heater element can be a main stator heater of the controllable voltage generator.

In accordance with at least one aspect of this disclosure, a non-transitory computer readable medium can include computer executable instructions configured to cause a computer to execute a method. The method can include monitoring for overvoltage to a generator control unit (GCU) from a generator, and dividing voltage output between a GCU and a resistive heater element to attenuate the overvoltage to the GCU by dissipating excess energy as heat.

In certain embodiments, the method can further include receiving GCU power from a permanent magnet generation of the generator and controlling a variable frequency generator (VFG) of the generator with the GCU. Dividing voltage between the resistive heater element can include dividing voltage between a main stator heater of the VFG and the GCU.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:

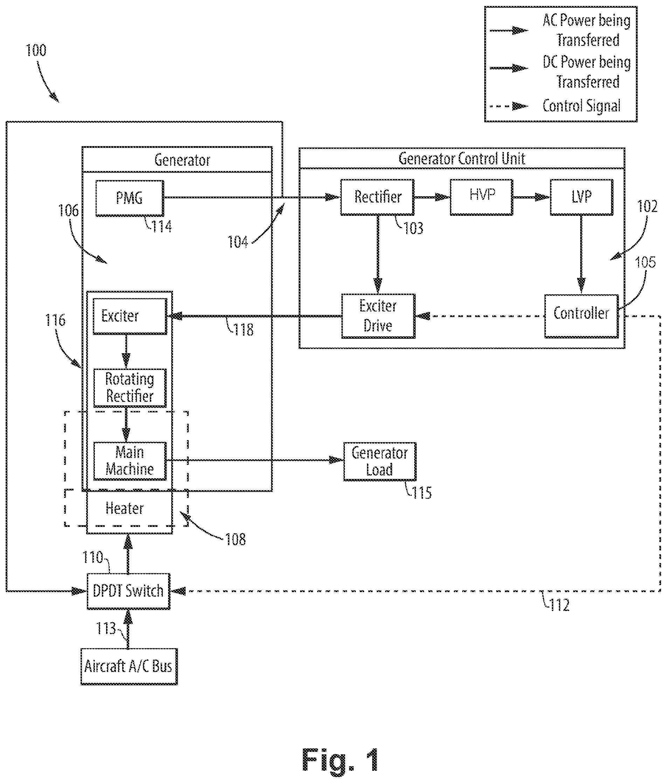

Fig. 1 is a schematic view of an embodiment of a generator system in accordance with this disclosure, illustrating accounting for overvoltage of a generator.

### DETAILED DESCRIPTION

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100, for example.

Referring to Fig. 1, a generator system 100 can include a generator control unit (GCU) 102 configured to control a generator output 104 of a generator 106. The GCU 102 can be configured to monitor the generator output for overvoltage and attenuate an overvoltage by directing at least a portion of the generator output to a heater element 108. The GCU 102 is configured to cause voltage division of the generator output between the GCU 102 and the heater element 108 if an overvoltage is detected to protect one or more GCU 102 electrical components (e.g., the rectifier 103 and/or other components as shown in Fig. 1).

The generator system 100 can further include a divider switch 110 configured to be disposed between the heater element 108 and a generator output line 104 to selectively and electrically communicate the generator output line 104 to the heater element 108. In certain embodiments, the heater element 108 can be connected to the divider switch 110 controlled by the GCU 102 via a control line 112 to selectively form a voltage divider between the GCU 102 and the heating element 108.

In certain embodiments, the divider switch 110 can be a double pole switch configured to connect to multiple inputs. For example, as shown, the divider switch 110 can be connected to a second line 113 (e.g., an aircraft A/C bus) to be controlled by an aircraft system to control normal use of the heater element.

In certain embodiments, the generator system 100 can further include the generator 106. The generator 106 can include a permanent magnet generator (PMG) 114. The generator output line 104 can be a PMG output line (e.g., as shown). In certain other embodiments, the generator 106 can include a controllable voltage generator 116 controlled by the GCU 102 via a control line 118 to output a controlled voltage (e.g., to a generator load 115 as shown). In certain embodiments, the generator 106 can be a variable frequency generator (VFG).

In certain embodiments, the generator system 100 can further include the heater element 108. The heater element 108 can be a main stator heater of the controllable voltage generator 116. The heater element 108 can be any type of heater element (e.g., an aircraft de-ice heater).

In certain embodiments the generator system 100 can further include a ram air turbine (RAT) operatively connected to the generator 106 to drive the generator 106. For example, when the RAT is in a stowed position, the aircraft can operate the divider switch 110 to provide energy to the heating element 108 to provide heat to the generator 106 (e.g., to maintain a suitable generator and/or compartment temperature to ensure suitable deployment of the RAT). When the RAT is deployed, the heating element 108 may no longer be needed for heating, and the GCU 102 controller can operate the divider switch 110 to provide energy to the heating element 108 to attenuate an overvoltage.

In accordance with at least one aspect of this disclosure, a ram air turbine (RAT) system can be or include any suitable generator system as disclosed herein, for example, generator system 100 as described above.

A non-transitory computer readable medium comprising computer executable instructions can be configured to cause a computer to execute a method. The method can include monitoring for overvoltage to a generator control unit (GCU) from a generator and dividing voltage output between a GCU and a resistive heater element to attenuate the overvoltage to the GCU by dissipating excess energy as heat.

In certain embodiments, a controller can monitor the output of the generator to the GCU. In certain embodiments, a sensor can sense the output of the generator on the generator output line to create a feedback loop and to monitor the output of the generator to the GCU. The controller can monitor the output of the generator to the GCU without an additional sensor. The controller can include an absolute threshold such that when the sensed voltage rises above the threshold, the controller can close the divider switch to communicate the generator output line to the heating element. In certain embodiments, based on a maximum voltage rating/derating for one or more components, the controller can have a lower than actual threshold so there is time for the controller to react prior to maximum voltage reaching the one or more components. In certain embodiments, the controller can be configured to react in the millisecond range. Any suitable controller speed is contemplated herein.

Certain embodiments can include a RAT PMG active response overvoltage attenuator. For example, embodiments can implement an active response PMG overvoltage attenuator, which can utilize a GCU and RAT generator main stator heater, for example. A GCU closed feedback loop can monitor the frequency of the main output voltage. Exploiting the closed loop system feedback data, the GCU can detect the need for active overvoltage attenuation, since the voltage is directly proportional to the feedback elements, for example.

Traditionally, the main stator heater is only used in the stowed position and separately sourced. The resistive heat produced can be used to maintain the airgap temperature for successful deployment performance of a RAT onboard an aircraft (e.g., in an emergency), for example. The heater may not be needed during deployment as the static stowed mode is now a kinematic system producing energy, for example. In certain embodiments, the main stator heater can be a purely resistive component. During an overvoltage event, the GCU can sense and divert the PMG over voltage output to the resistive component creating a voltage divider circuit topology. This can limit the voltage that could pass through the GCU into the rest of the system while simultaneously dissipating the excess energy into heat, stabilizing the over speed event quicker. Embodiments can allow for active over voltage control and load switching system stabilization.

Certain embodiments can be employed with systems using an air cooled VFG for example. Embodiments can protect load systems against over voltage conditions due to over speed events (e.g., caused by sudden loss of load in the load system), for example.

Certain embodiments can protect the components of the GCU. In certain embodiments, the electrical components (e.g., power conversion equipment, e.g., the rectifier) of the GCU may require protection because they are located downstream of a PMG and the PMG cannot actively control its own voltage. Traditional approaches have included upsizing the conversion electronics within the GCU, however this adds weight to the system. Embodiments reduce system size and weight and utilize existing architecture to provide electrical protection to sensitive components of the generator.

Embodiments can include any suitable computer hardware and/or software module(s) to perform any suitable function (e.g., as disclosed herein). As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the spirit and scope of the subject disclosure.

## Claims

1. A generator system, comprising:
a generator control unit "GCU" (102) configured to control a generator output of a generator, wherein the GCU is configured to:
monitor the generator output for overvoltage; and
attenuate an overvoltage by directing at least a portion of the generator output to a heater element.

2. The system of claim 1, wherein the GCU is configured to cause voltage division of the generator output between the GCU and the heater element if an overvoltage is detected to protect one or more GCU electrical components.

3. The system of claim 1 or 2, further comprising a divider switch configured to be disposed between the heater element and a generator output line to selectively electrically communicate the generator output line with the heater element, and optionally wherein the heater element is connected to the divider switch controlled by the GCU to selectively form a voltage divider between the GCU and the heating element.

4. The system of any preceding claim, further comprising the generator, and optionally wherein the generator includes a permanent magnet generator "PMG".

5. The system of claim 3, wherein the generator output line is a PMG output line.

6. The system of claim 4, wherein the generator includes a controllable voltage generator controlled by the GCU to output a controlled voltage, and optionally further comprising the heater element, wherein the heater element is a main stator heater of the controllable voltage generator.

7. The system of claim 4, further comprising a ram air turbine "RAT" operatively connected to the generator to drive the generator.

8. The system of any preceding claim, wherein the generator is a variable frequency generator "VFG"

9. A system, comprising:
a generator;
a ram air turbine "RAT" operatively connected to the generator to drive the generator.
a generator control unit "GCU" configured to control a generator output of a generator, wherein the GCU (102) is configured to:
monitor the generator output for overvoltage; and
attenuate an overvoltage by directing at least a portion of the generator output to a heater element.

10. The system of claim 9, wherein the GCU (102) comprises a rectifier, wherein the GCU (102) is configured to cause voltage division of the generator output between the GCU (102) and the heater element if an overvoltage is detected to protect the rectifier of the GCU (102).

11. The system of claim 13, wherein the GCU (102) further comprises a controller configured to receive voltage and current inputs from the generator and output an excitation command.

12. The system of claim 11, wherein the GCU (102) includes an exciter drive connected to the controller to receive the excitation command from the controller, wherein the controller is configured to control the exciter drive to output an excitation signal as a function of the excitation command.

13. The system of claim 12, wherein the generator includes a controllable voltage generator connected to the exciter drive of the GCU (102) to receive the excitation signal and output a controlled voltage, and optionally further comprising the heater element, wherein the heater element is a main stator heater of the controllable voltage generator.

14. A system, comprising:
a non-transitory computer readable medium comprising computer executable instructions configured to cause a computer to execute a method, the method comprising:
monitoring for overvoltage to a generator control unit "GCU" from a generator; and
dividing voltage output between a GCU (102) and a resistive heater element to attenuate the overvoltage to the GCU (102) by dissipating excess energy as heat.

15. The system of claim 14, wherein the method further comprises receiving GCU power from a permanent magnet generation of the generator and controlling a variable frequency generator "VFG" of the generator with the GCU (102), and optionally wherein dividing voltage between the resistive heater element includes dividing voltage between a main stator heater of the VFG and the GCU (102).
